(19) Europäisches Patentamt
European Patent Office
Office européen des brevets

(11) EP 4 707 127 A1

(12) EUROPEAN PATENT APPLICATION
published in accordance with Art. 153(4) EPC

(43) Date of publication:
11.03.2026 Bulletin 2026/11

(51) International Patent Classification (IPC):
B62D 5/04 (2006.01)    B62D 6/00 (2006.01)

(21) Application number: 24825316.3

(22) Date of filing: 20.06.2024

(52) Cooperative Patent Classification (CPC):
B62D 5/0466; B62D 5/04; B62D 6/00; B62D 6/006;
B62D 6/008

(86) International application number:
PCT/CN2024/100467

(87) International publication number:
WO 2024/260429 (26.12.2024 Gazette 2024/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 21.06.2023  CN 202310746157
21.06.2023  CN 202310744588

(71) Applicant: Beijing Chehejia Automobile
Technology Co., Ltd.
Beijing 101300 (CN)

(72) Inventor: HE, Jie
Beijing 101300 (CN)

(74) Representative: 2SPL Patentanwälte PartG mbB
Landaubogen 3
81373 München (DE)

(54) STEERING MOMENT COMPENSATION METHOD AND APPARATUS, MEDIUM, AND VEHICLE

(57)    A steering moment compensation method and apparatus, a medium, and a vehicle. The steering moment compensation method comprises: acquiring a steering wheel angle, a vehicle speed and a rack force of a vehicle; on the basis of the steering wheel angle, the vehicle speed and the rack force, determining a steering moment compensation integral value by using a preset steering moment compensation algorithm, wherein the steering moment compensation integral value is used for representing an absolute value of a steering moment compensation value, and the preset steering moment compensation algorithm is used for limiting an upper limit value of the steering moment compensation integral value, and under the steering moment working condition, enabling the steering moment compensation integral value to reach the upper limit value and to decrease along with decrease of the absolute value of the rack force; and multiplying the steering moment compensation integral value by a positive/negative symbol of the rack force to obtain the steering moment compensation value. According to the compensation method, the steering moment compensation value can be adaptively adjusted along with the change of a road adhesion coefficient, thereby avoiding the problem of excessive steering moment compensation on a low-adhesion road, and ensuring the driving safety.

Acquire a steering wheel angle, a vehicle speed, and a rack force of a vehicle — S110

Determine, based on the steering wheel angle, the vehicle speed and the rack force, a steering holding torque compensation integral value using a preset steering holding torque compensation algorithm — S120

Obtain the steering holding torque compensation value through multiplying the steering holding torque compensation integral value by a positive or negative sign of the rack force — S130

FIG. 1

**Description**

The present application claims priority to Chinese patent application No. 202310746157.8, entitled "STEERING HOLDING TORQUE COMPENSATION METHOD AND APPARATUS, MEDIUM, AND VEHICLE", filed before the China National Intellectual Property Administration (CNIPA) on June 21, 2023, and Chinese patent application No. 202310744588.0, entitled "STEERING HOLDING TORQUE COMPENSATION METHOD AND APPARATUS, MEDIUM, AND VEHICLE", filed before the CNIPA on June 21, 2023, the entire contents of which are incorporated herein by reference.

**TECHINCAL FIELD**

The present disclosure relates to the field of vehicle technology, in particular to a method and apparatus for compensating a steering holding torque, a medium, and a vehicle.

**BACKGROUND**

Under a steering holding condition (i.e., when the driver maintains a fixed steering wheel angle or allows the wheel to return slowly during steady-state cornering), certain vehicle models may experience excessive rack force due to overly high wheel cornering stiffness or inappropriate selection of kingpin inclination parameters. This leads to an excessively heavy steering hand torque during the steering holding process, degrading the steering feel in such scenarios. Currently, the EPS (Electric Power Steering) assist torque adjustment method based on and lookup tables is commonly used to optimize the return-to-center effect and the steering feel under the holding condition. However, this EPS assist torque adjustment method based on steering wheel angle lookup tables is suitable for high-adhesion roads. For low-adhesion roads (such as wet, waterlogged, snowy, or icy roads), the road adhesion coefficient is low, resulting in a small reaction torque from the road on the wheels. Nevertheless, the obtained steering holding torque compensation value still applies to high-adhesion roads. As a result, when resisting the aforementioned small reaction torque, the required steering hand torque becomes excessively light. Therefore, for low-adhesion roads, this method leads to excessive compensation of the steering holding torque, resulting in an abnormally light steering feel for the driver, poor road feedback, and compromised driving safety.

**SUMMARY**

In view of the above technical issues, the present disclosure provides a method and apparatus for compensating a steering holding torque, a medium, and a vehicle that can adaptively adjust the steering holding torque compensation value as the road adhesion coefficient changes, thereby avoiding overcompensation of the steering holding torque on low-adhesion road surfaces and ensuring driving safety.

The present disclosure provides a method for compensating a steering holding torque, including:

acquiring a steering wheel angle, a vehicle speed, and a rack force of a vehicle;

determining, based on the steering wheel angle, the vehicle speed and the rack force, a steering holding torque compensation integral value using a preset steering holding torque compensation algorithm, where the steering holding torque compensation integral value represents an absolute value of a steering holding torque compensation value, and the preset steering holding torque compensation algorithm is used to limit an upper limit of the steering holding torque compensation integral value and, under a steering holding condition, causes the steering holding torque compensation integral value to reach the upper limit and decrease as an absolute value of the rack force decreases; and

obtaining the steering holding torque compensation value through multiplying the steering holding torque compensation integral value by a positive or negative sign of the rack force.

In the present disclosure, the determining, based on the steering wheel angle, the vehicle speed and the rack force, a steering holding torque compensation integral value using a preset steering holding torque compensation algorithm includes:

determining a target upper limit for steering holding torque compensation based on the steering wheel angle, the vehicle speed, and the rack force; and

determining the steering holding torque compensation integral value based on the target upper limit for steering holding torque compensation, the steering wheel angle, and the vehicle speed.

In the present disclosure, the determining a target upper limit for steering holding torque compensation based on the steering wheel angle, the vehicle speed, and the rack force includes:

obtaining, based on the vehicle speed, the absolute value of the rack force and a first mapping relationship, an initial upper limit for steering holding torque compensation corresponding to the vehicle speed and the absolute value of the rack force, where the first mapping relationship includes a correspondence among the vehicle speed, the absolute value of the rack force, and the initial upper limit for steering holding torque compensation; and

obtaining the target upper limit for steering holding torque compensation by adjusting the initial upper limit for steering holding torque compensation based on a relationship between positive or negative signs of the steering wheel angle and the rack force.

In the present disclosure, the obtaining the target upper limit for steering holding torque compensation by adjusting the initial upper limit for steering holding torque compensation based on a relationship between positive or negative signs of the steering wheel angle and the rack force includes:

taking the initial upper limit for steering holding torque compensation as the target upper limit for steering holding torque compensation when signs of the steering wheel angle and the rack force are same; or

taking 0 as the target upper limit for steering holding torque compensation when signs of the steering wheel angle and the rack force are opposite.

In the present disclosure, the determining the steering holding torque compensation integral value based on the target upper limit for steering holding torque compensation, the steering wheel angle, and the vehicle speed includes:

obtaining an integral gain corresponding to the vehicle speed based on the vehicle speed and a second mapping relationship, wherein the second mapping relationship includes a correspondence between the vehicle speed and the integral gain;

obtaining a steering holding torque compensation increment through multiplying a variation of the steering wheel angle by the integral gain, where the variation of the steering wheel angle is a difference between an absolute value of a previous steering wheel angle and an absolute value of a current steering wheel angle, the previous steering wheel angle is the steering wheel angle in a previous operation cycle, and the current steering wheel angle is the steering wheel angle in a current operation cycle;

obtaining the steering holding torque compensation integral value through limiting, based on the target upper limit for steering holding torque compensation and 0, a sum of a historical steering holding torque compensation integral value and the steering holding torque compensation increment, where the historical steering holding torque compensation integral value is the steering holding torque compensation integral value in the previous operation cycle.

In the present disclosure, the obtaining the steering holding torque compensation integral value through limiting, based on the target upper limit for steering holding torque compensation and 0, a sum of a historical steering holding torque compensation integral value and the steering holding torque compensation increment includes:

taking the sum of the historical steering holding torque compensation integral value and the steering holding torque compensation increment as the steering holding torque compensation integral value when the sum is greater than or equal to 0 and less than or equal to the target upper limit for steering holding torque compensation;

taking 0 as the steering holding torque compensation integral value when the sum of the historical steering holding torque compensation integral value and the steering holding torque compensation increment is less than 0;

taking the target upper limit for steering holding torque compensation as the steering holding torque compensation integral value when the sum of the historical steering holding torque compensation integral value and the steering holding torque compensation increment is greater than the target upper limit for steering holding torque compensation.

In the present disclosure, before the determining, based on the steering wheel angle, the vehicle speed and the rack force, a steering holding torque compensation integral value using a preset steering holding torque compensation algorithm, the method further includes:

performing low-pass filtering on the steering wheel angle and the rack force.

The present disclosure provides an apparatus for compensating a steering holding torque, including:

a compensation parameter acquisition module, configured to acquire a steering wheel angle, a vehicle speed, and a rack force of a vehicle;

a compensation integral value determination module, configured to determine, based on the steering wheel angle, the vehicle speed and the rack force, a steering holding torque compensation integral value using a preset steering holding torque compensation algorithm, where the steering holding torque compensation integral value represents an absolute value of a steering holding torque compensation value, and the preset steering holding torque compensation algorithm is used to limit an upper limit of the steering holding torque compensation integral value and, under a steering holding condition, causes the steering holding torque compensation integral value to reach the upper limit and decrease as an absolute value of the rack force decreases; and

a steering holding torque compensation value determination module, configured to obtain the steering holding torque compensation value through multiplying the steering holding torque compensation integral value by a positive or negative sign of the rack force.

The present disclosure provides a method for compensating a steering holding torque, including:

acquiring a steering wheel angle, a vehicle speed, a rack force, and a base hand torque of a vehicle;

calculating, based on the steering wheel angle, the vehicle speed and the rack force, a steering holding torque attenuation coefficient using a preset attenuation coefficient calculation rule, where the preset attenuation coefficient calculation rule is used to limit an upper limit of an absolute value of a steering holding torque compensation value using the steering holding torque attenuation coefficient and, under a steering holding condition, causes the absolute value of the steering holding torque compensation value to reach the upper limit and decrease as an absolute value of the rack force decreases; and

obtaining the steering holding torque compensation value through multiplying the base hand torque by the steering holding torque attenuation coefficient.

In the present disclosure, the calculating, based on the steering wheel angle, the vehicle speed and the rack force, a steering holding torque attenuation coefficient using a preset attenuation coefficient calculation rule includes:

determining a target upper limit of the steering holding torque attenuation coefficient based on the steering wheel angle, the vehicle speed, and the rack force; and

calculating the steering holding torque attenuation coefficient based on the target upper limit of the steering holding torque attenuation coefficient, the steering wheel angle, and the vehicle speed.

In the present disclosure, the determining a target upper limit of the steering holding torque attenuation coefficient based on the steering wheel angle, the vehicle speed, and the rack force includes:

obtaining, based on the vehicle speed, the absolute value of the rack force and a third mapping relationship, an initial upper limit of steering holding torque attenuation coefficient corresponding to the vehicle speed and the absolute value of the rack force, where the third mapping relationship includes a correspondence among the vehicle speed, the absolute value of the rack force, and the initial upper limit of steering holding torque attenuation coefficient; and

obtaining the target upper limit of the steering holding torque attenuation coefficient through adjusting, based on a relationship between signs of the steering wheel angle and the rack force, the initial upper limit of steering holding torque attenuation coefficient.

In the present disclosure, the obtaining the target upper limit of the steering holding torque attenuation coefficient through adjusting, based on a relationship between signs of the steering wheel angle and the rack force, the initial upper limit of steering holding torque attenuation coefficient includes:

taking the initial upper limit of steering holding torque attenuation coefficient as the target upper limit of the steering holding torque attenuation coefficient when the signs of the steering wheel angle and the rack force are same; or

taking 0 as the target upper limit of the steering holding torque attenuation coefficient when the signs of the steering wheel angle and the rack force are opposite.

In the present disclosure, the calculating the steering holding torque attenuation coefficient based on the target upper limit of the steering holding torque attenuation coefficient, the steering wheel angle, and the vehicle speed includes:

obtaining, based on the vehicle speed and a fourth mapping relationship, an integral gain corresponding to the vehicle speed, wherein the fourth mapping relationship includes a correspondence between the vehicle speed and the integral gain;

obtaining a torque attenuation coefficient increment through multiplying a variation of the steering wheel angle by the integral gain, wherein the variation of the steering wheel angle is a difference between an absolute value of a previous steering wheel angle and an absolute value of a current steering wheel angle, the previous steering wheel angle is the steering wheel angle in a previous operation cycle, and the current steering wheel angle is the steering wheel angle in a current operation cycle; and

obtaining the steering holding torque attenuation coefficient through limiting, based on the target upper limit of the steering holding torque attenuation coefficient and 0, a sum of a historical steering holding torque attenuation coefficient and the torque attenuation coefficient increment, wherein the historical steering holding torque attenuation coefficient is the steering holding torque attenuation coefficient in the previous operation cycle.

In the present disclosure, the obtaining the steering holding torque attenuation coefficient through limiting, based on the target upper limit of the steering holding torque attenuation coefficient and 0, a sum of a historical steering holding torque attenuation coefficient and the torque attenuation coefficient increment includes:

taking the sum of the historical steering holding torque attenuation coefficient and the torque attenuation coefficient increment as the steering holding torque attenuation coefficient when the sum is greater than or equal to 0 and less than or equal to the target upper limit of the steering holding torque attenuation coefficient;

taking 0 as the steering holding torque attenuation coefficient when the sum of the historical steering holding torque attenuation coefficient and the torque attenuation coefficient increment is less than 0;

taking the target upper limit of the steering holding torque attenuation coefficient as the steering holding torque attenuation coefficient when the sum of the historical steering holding torque attenuation coefficient and the torque attenuation coefficient increment is greater than the target upper limit of the steering holding torque attenuation coefficient.

In the present disclosure, after the acquiring a steering wheel angle, a vehicle speed, a rack force, and a base hand torque of a vehicle, the method further includes:
performing low-pass filtering on the steering wheel angle and the rack force.

The present disclosure provides an apparatus for compensating a steering holding torque, including:

a compensation parameter acquisition module, configured to acquire a steering wheel angle, a vehicle speed, a rack force, and a base hand torque of a vehicle;

a torque attenuation coefficient calculation module, configured to calculate, based on the steering wheel angle, the vehicle speed and the rack force, a steering holding torque attenuation coefficient using a preset attenuation coefficient calculation rule, where the preset attenuation coefficient calculation rule is used to limit an upper limit of an absolute value of a steering holding torque compensation value using the steering holding torque attenuation coefficient and, under a steering holding condition, causes the absolute value of the steering holding torque compensation value to reach the upper limit and decrease as an absolute value of the rack force decreases; and

a steering holding torque compensation value determination module, configured to obtain the steering holding torque compensation value through multiplying the base hand torque by the steering holding torque attenuation coefficient.

The present disclosure also provides a computer-readable storage medium stored with a program or instructions, and the program or instructions cause a computer to execute the steps of any of the methods described above.

The present disclosure also provides a vehicle, including:

one or more processors;

a memory, configured to store one or more programs or instructions;

where the processor is configured to call the programs or instructions stored in the memory, and execute the steps of any of the methods described above.

The present disclosure also provides a computer program, including computer-readable code that, when run on a computer, causes the computer to execute the steps of any of the methods described above.

The technical solutions provided by embodiments of the present disclosure offer the following advantages over the related art.

In the solutions provided by the embodiment of the present disclosure, considering that the absolute value of the rack force decreases as the road adhesion coefficient decreases, the rack force is used as an influencing factor for the steering holding torque compensation value. Based on the rack force together with the steering wheel angle and the vehicle speed, the preset steering holding torque compensation algorithm provided by the embodiments of the present disclosure is used to obtain the steering holding torque compensation value. The preset steering holding torque compensation algorithm is used to limit the upper limit of the steering holding torque compensation integral value and, under a steering holding condition, causes the steering holding torque compensation integral value to reach the upper limit and decrease as the absolute value of the rack force decreases. Moreover, the steering holding torque compensation integral value is the absolute value of the steering holding torque compensation value, enabling the steering holding torque compensation value to be dynamically adjusted according to the rack force. This allows the steering holding torque compensation value to adaptively decrease as the road adhesion coefficient decreases, avoiding overcompensation of steering holding torque on low-friction road surfaces and ensuring driving safety.

In the solutions provided by the embodiment of the present disclosure, considering that the absolute value of the rack force decreases as the road adhesion coefficient decreases, the rack force is used as an influencing factor for the steering holding torque compensation value. Based on the rack force together with the steering wheel angle and the vehicle speed, the preset attenuation coefficient calculation rule provided by the embodiment of the present disclosure is used to obtain the steering holding torque attenuation coefficient. The steering holding torque attenuation coefficient is used to limit the upper limit of the absolute value of the steering holding torque compensation value and, under a steering holding condition, causes the absolute value of the steering holding torque compensation value to reach the upper limit and decrease as the absolute value of the rack force decreases. This enables the steering holding torque compensation value to be dynamically adjusted according to the rack force, thereby allowing the steering holding torque compensation value to adaptively decrease as the road adhesion coefficient decreases, avoiding overcompensation of steering holding torque on low-friction road surfaces and ensuring driving safety.

The above description is only a general overview of solutions of the present disclosure. In order to learn technical means of the present disclosure more clearly and allow the technical means to be implemented based on the disclosure of the description, and in order to make the above and other objects, features and advantages of the present disclosure more apparent and understandable, specific embodiments of the present disclosure are illustrated below.

**BRIEF DESCRIPTION OF THE DRAWINGS**

The accompanying drawings, which are incorporated in and constitute a part of this specification, illustrate embodiments consistent with the present disclosure and, together with the description, serve to explain the principles of the present disclosure.

In order to describe technical solutions of the embodiments of the present disclosure or the related art more clearly, the accompanying drawings used in the illustration of the embodiments or the related art will be briefly introduced. Apparently, those skilled in the art may obtain other accompanying drawings based on these accompanying drawings without paying any creative effort.

FIG. 1 is a flowchart of a method for compensating a steering holding torque according to an embodiment of the present disclosure;

FIG. 2 is a structural block diagram for executing the method for compensating a steering holding torque according to an embodiment of the present disclosure;

FIG. 3 is a detailed structural block diagram of a maximum steering holding compensation torque calculation module in FIG. 2;

FIG. 4 is a detailed structural block diagram of a steering holding torque compensation value integration calculation module in FIG. 2;

FIG. 5 is an effect diagram of the steering holding torque compensation value according to an embodiment of the present disclosure;

FIG. 6 is a structural block diagram of an apparatus for compensating a steering holding torque according to an embodiment of the present disclosure;

FIG. 7 is a flowchart of a method for compensating a steering holding torque according to an embodiment of the present disclosure;

FIG. 8 is a structural block diagram for executing the method for compensating a steering holding torque according to an embodiment of the present disclosure;

FIG. 9 is a detailed structural block diagram of a maximum steering holding attenuation coefficient calculation module in FIG. 8;

FIG. 10 is a detailed structural block diagram of a steering holding torque attenuation coefficient integration calculation module in FIG. 8;

FIG. 11 is an effect diagram of the steering holding torque compensation value according to an embodiment of the present disclosure;

FIG. 12 is a structural block diagram of an apparatus for compensating a steering holding torque according to an embodiment of the present disclosure; and

FIG. 13 is a schematic structural diagram of a vehicle according to an embodiment of the present disclosure.

## DETAILED DESCRIPTION

To make objectives, technical solutions, and advantages of embodiments of the present disclosure clearer, solutions of the present disclosure will be given below. It should be noted that, in the absence of conflict, embodiments of the present disclosure and features in these embodiments may be combined with each other.

Many specific details are set forth in the following description to facilitate a full understanding of the present disclosure. However, the present disclosure may also be implemented in other ways different from those described herein. Apparently, the embodiments in the specification are only a part of the embodiments of the present disclosure, and not all of them. Based on the embodiments of the present disclosure, all other embodiments obtained by those skilled in the art without creative efforts shall fall within the protection scope of the present disclosure.

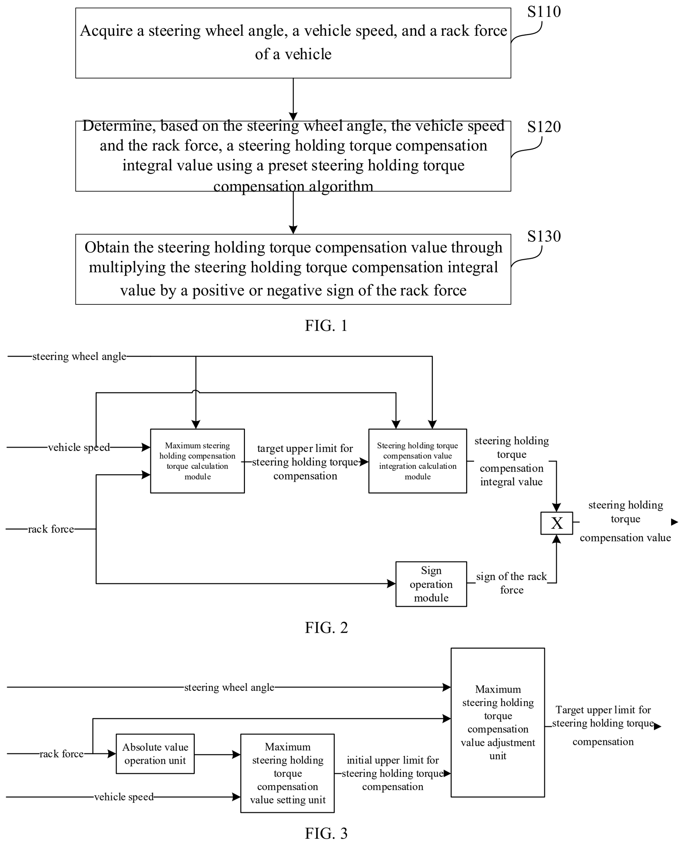

FIG. 1 is a flowchart of a method for compensating a steering holding torque provided by an embodiment of the present disclosure. This method is applicable to compensating the steering holding torque during the steering wheel return-to-center process. It can be applied to an Electric Power Steering (EPS) system or a Steer-By-Wire (SbW) system adopting hand torque closed-loop control to reduce a reference hand torque under the steering hold condition. Consequently, the hand torque closed-loop controller is used to adjust the motor torque command for the assist motor or steering feel simulation motor, thereby reducing the steering holding torque in such conditions and improving steering feel comfort. This method may be executed by an apparatus for compensating a steering holding torque, which may be implemented in software and/or hardware. As shown in FIG. 1, the method includes steps described below.

At S110, a steering wheel angle, a vehicle speed, and a rack force of the vehicle are acquired.

For example, the steering wheel angle can be obtained by collecting the steering wheel angle information using a steering wheel angle sensor; the vehicle speed can be obtained by collecting the vehicle speed information using a speed sensor; and the rack force can be estimated by an existing rack force estimation module or through an existing rack force estimation method. Herein, the rack force refers to the steering resistance transmitted to the rack through the steering tie rod.

At S120, a steering holding torque compensation integral value is determined, based on the steering wheel angle, the vehicle speed, and the rack force, using a preset steering holding torque compensation algorithm.

The steering holding torque compensation integral value represents the absolute value of the steering holding torque compensation value. The preset steering holding torque compensation algorithm is used to limit an upper limit of the steering holding torque compensation integral value and, under a steering holding condition, it enables the steering holding torque compensation integral value to reach the upper limit and decrease as the absolute value of the rack force decreases.

At S130, a steering holding torque compensation value is obtained through multiplying the steering holding torque compensation integral value by the positive/negative sign of the rack force.

In this embodiment of the present disclosure, the positive/negative sign is used to indicate the positivity or negativity of the relevant parameters and can be defined artificially. For example, when the steering wheel is turned left relative to the center position, the steering holding torque compensation integral value and the rack force are both negative; when the steering wheel is turned right relative to the center position, the steering holding torque compensation integral value and the rack force are both positive.

In some embodiments, the step, in which a steering holding torque compensation integral value is determined, based on the steering wheel angle, the vehicle speed, and the rack force, using a preset steering holding torque compensation algorithm, includes: determining a target upper limit for steering holding torque compensation based on the steering wheel angle, the vehicle speed, and the rack force; and determining the steering holding torque compensation integral value based on the target upper limit for steering holding torque compensation, the steering wheel angle, and the vehicle speed.

FIG. 2 is a block diagram of a structure for executing the above method for compensating the steering holding torque. Specifically, as shown in FIG. 2, a maximum steering holding compensation torque calculation module is configured to: calculate the target upper limit for steering holding torque compensation based on the steering wheel angle, the vehicle speed, and the rack force; and output the target upper limit for steering holding torque compensation to the steering holding torque compensation value integral calculation module. The steering holding torque compensation value integral calculation module is configured to: obtain the steering holding torque compensation integral value by performing cumulative operations based on the target upper limit for steering holding torque compensation, the steering wheel angle, and the vehicle speed; and output the steering holding torque compensation integral value to a multiplier "X". A sign operation module is used to extract the positive or negative sign of the rack force and output the sign to the multiplier "X". The multiplier "X" is configured to multiply the steering holding torque compensation integral value by the positive/negative sign of the rack force, and output the steering holding torque compensation value.

In some embodiments, the target upper limit for steering holding torque compensation is determined based on the steering wheel angle, the vehicle speed, and the rack force as follows: based on the vehicle speed, the absolute value of the rack force, and a first mapping relationship including a correspondence among the vehicle speed, the absolute value of the rack force, and an initial upper limit for steering holding torque compensation, obtaining the initial upper limit for steering holding torque compensation corresponding to the vehicle speed and the absolute value of the rack force; adjusting the initial upper limit for steering holding torque compensation based on a relationship between signs of the steering wheel angle and the rack force, and obtaining the target upper limit for steering holding torque compensation.

Accordingly, as shown in FIG. 3, the maximum steering holding compensation torque calculation module includes an absolute value operation unit, a maximum steering holding torque compensation value setting unit, and a maximum steering holding torque compensation value adjustment unit. The absolute value operation unit is configured to obtain the absolute value of the rack force by performing an absolute value operation on the rack force. The maximum steering holding torque compensation value setting unit is configured to obtain the initial upper limit for steering holding torque compensation corresponding to the vehicle speed and the absolute value of the rack force based on the vehicle speed, the absolute value of the rack force, and the first mapping relationship. The maximum steering holding torque compensation value adjustment unit is configured to obtain the target upper limit for steering holding torque compensation by adjusting the initial upper limit for steering holding torque compensation based on the relationship between signs of the steering wheel angle and the rack force. The first mapping relationship may specifically be a two-dimensional mapping table including the correspondence among the vehicle speed, the absolute value of the rack force, and the initial upper limit for steering holding torque compensation. This correspondence can be calibrated through real vehicle testing.

Specifically, the operation of obtaining the target upper limit for steering holding torque compensation by adjusting the initial upper limit for steering holding torque compensation based on the relationship between signs of the steering wheel angle and the rack force includes: taking the initial upper limit for steering holding torque compensation as the target upper limit for steering holding torque compensation when the signs of the steering wheel angle and the rack force are same; taking 0 as the target upper limit for steering holding torque compensation when the signs of the steering wheel angle and the rack force are opposite. In this embodiment, when the steering wheel returns to the vicinity of the center position, the variation of the positive/negative sign of the rack force is earlier than that of the steering wheel angle. At this moment, the rack force transitions from a return force to a steering resistance, and compensation for the steering holding torque is no longer required. Therefore, when the steering wheel angle and the rack force have opposite positive/negative signs, the target upper limit for steering holding torque compensation is set as 0. This prevents the erroneous application of holding torque compensation under the aforementioned conditions, thereby avoiding inappropriate compensation that would create a steering feel inconsistent with the actual driving scenario. This approach optimizes the steering feel and enhances steering comfort.

In some embodiments, the operation of determining the steering holding torque compensation integral value based on the target upper limit for steering holding torque compensation, the steering wheel angle, and the vehicle speed includes: obtaining, based on the vehicle speed and a second mapping relationship including a correspondence between the vehicle speed and an integral gain, the integral gain corresponding to the vehicle speed; obtaining a steering holding torque compensation increment through multiplying the variation of the steering wheel angle by the integral gain, where the variation of the steering wheel angle is a difference between the absolute value of the previous steering wheel angle and the absolute value of the current steering wheel angle, the previous steering wheel angle refers to the steering wheel angle in the previous operation cycle, and the current steering wheel angle refers to the steering wheel angle in the current operation cycle; limiting a sum of the historical steering holding torque compensation integral value and the steering holding torque compensation increment based on the target upper limit for steering holding torque compensation and 0, and obtaining the steering holding torque compensation integral value, where the historical steering holding torque compensation integral value is the steering holding torque compensation integral value in the previous operation cycle.

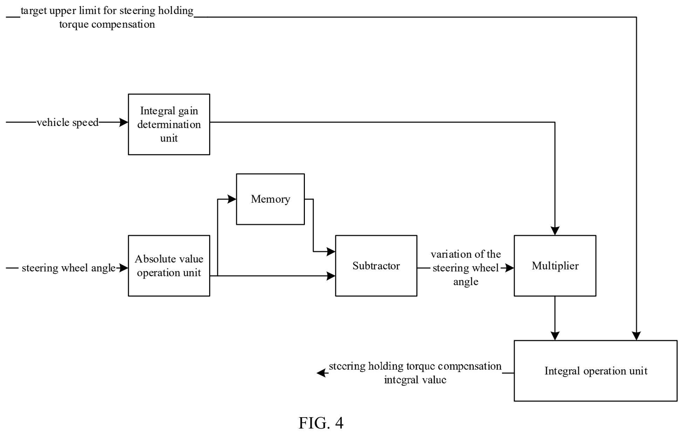

Accordingly, as shown in FIG. 4, the steering holding torque compensation value integration calculation module includes an integral gain determination unit, an absolute value operation unit, a memory, a subtractor, a multiplier, and an integral operation unit. The integral gain determination unit is configured to obtain the integral gain corresponding to the vehicle speed based on the vehicle speed and the second mapping relationship; and output the integral gain to the multiplier. The absolute value operation unit is configured to obtain the absolute value of the steering wheel angle by performing an absolute value operation on the steering wheel angle. The memory is configured to store the absolute value of the steering wheel angle obtained each time. The subtractor is configured to subtract the absolute value of the steering wheel angle stored in the memory in the previous operation (i.e., the absolute value of the previous steering wheel angle) from the absolute value of the current steering wheel angle to obtain the variation of the steering wheel angle, and output the variation to the multiplier. The multiplier is configured to multiply the integral gain by the variation of the steering wheel angle to obtain the steering holding torque compensation increment, which is then output to the integral operation unit. The integral operation unit is configured to sum the historical steering holding torque compensation integral value and the steering holding torque compensation increment, and limit an upper and lower bounds of the sum of the historical steering holding torque compensation integral value and the steering holding torque compensation increment. The upper bound is set to the target upper limit for steering holding torque compensation, and the lower bound is set to 0. The second mapping relationship may specifically be a one-dimensional mapping table including the correspondence among the vehicle speed and the integral gain, which can be calibrated through real vehicle testing.

Specifically, the operations of limiting the sum of the historical steering holding torque compensation integral value and the steering holding torque compensation increment based on the target upper limit for steering holding torque compensation and 0 and obtaining the steering holding torque compensation integral value includes: taking the sum of the historical steering holding torque compensation integral value and the steering holding torque compensation increment as the steering holding torque compensation integral value when the sum of the historical steering holding torque compensation integral value and the steering holding torque compensation increment is greater than or equal to 0 and less than or equal to the target upper limit for steering holding torque compensation; taking 0 as the steering holding torque compensation integral value when the sum of the historical steering holding torque compensation integral value and the steering holding torque compensation increment is less than 0; taking the target upper limit for steering holding torque compensation as the steering holding torque compensation integral value when the sum of the historical steering holding torque compensation integral value and the steering holding torque compensation increment is greater than the target upper limit for steering holding torque compensation.

Accordingly, the steering holding torque compensation integral value $y_n$ can be expressed by the following formula, where the target upper limit for steering holding torque compensation is abbreviated as target compensation upper limit:

$$
y_n = \begin{cases}
y_{n-1} + x_n, & 0 \leq y_{n-1} + x_n \leq \text{target upper limit} \\
0, & y_{n-1} + x_n < 0 \\
\text{target upper limit}, & y_{n-1} + x_n > \text{target upper limit}
\end{cases}
$$

Here, $n$ represents the $n$-th operation cycle; $y_{n-1}$ is the historical steering holding torque compensation integral value; $x_n$ is the steering holding torque compensation increment. It should be noted that the steering holding torque compensation integral value at the initial moment can be set to 0.

Furthermore, when $y_n = 0$, it indicates that the current condition is not the steering holding condition, and no steering holding torque compensation is required; when $y_n = y_{n-1} + x_n$, it indicates that the current condition is in a transition stage between the steering holding condition and non-steering holding condition, and this process enables smooth transition of the steering holding torque compensation; when $y_n$ = the target upper limit for steering holding torque compensation, it indicates that the current condition is the steering holding condition, and the steering wheel angle is currently stably within the steering holding region. Therefore, the present disclosure can utilize the steering holding torque compensation integral value to determine whether the vehicle is in the steering holding condition, without the need for a separate complex algorithm to identify the steering holding condition.

In some embodiments, before the step, in which the steering holding torque compensation integral value is determined based on the steering wheel angle, the vehicle speed, and the rack force using the preset steering holding torque compensation algorithm, the method further includes: performing low-pass filtering on the steering wheel angle and the rack force. This can filter out noise signals in the steering wheel angle and the rack force and make the signals of the steering wheel angle and the rack force more stable, avoiding interference from noise signals and fluctuations in signals of the steering wheel angle and the rack force on the calculation of the steering holding torque compensation value, and improving the accuracy of the steering holding torque compensation value.

In some embodiments, after the step, in which the steering holding torque compensation value is obtained through multiplying the steering holding torque compensation integral value by the positive/negative sign of the rack force, the method further includes: acquiring an initial base hand torque; using the difference between the initial base hand torque and the steering holding torque compensation value as a target base hand torque; and using the sum of the target base hand torque, a return-to-center torque, a damping torque, a simulated friction torque, and a rack end protection torque as a reference hand torque. In this embodiment, the initial base hand torque corresponding to the rack force and the vehicle speed can be determined based on the rack force, the vehicle speed, and a fifth mapping relationship. The fifth mapping relationship includes the correspondence among the rack force, the vehicle speed, and the initial base hand torque. The fifth mapping relationship may specifically be a two-dimensional mapping table including the correspondence among the rack force, the vehicle speed, and the initial base hand torque, which can be calibrated through real vehicle testing. The target base hand torque is obtained by subtracting the steering holding torque compensation value from the initial base hand torque, thereby achieving compensation of the initial base hand torque based on the steering holding torque compensation value. A return-to-center torque calculated by a return-to-center torque module, a damping torque calculated by a damping torque module, a simulated friction torque calculated by a simulated friction torque module, and a rack end protection torque calculated by a rack end protection torque module are summed with the target base hand torque in an adder. This summation yields the reference hand torque, which represents the hand torque expected to be felt by the driver under current conditions. Consequently, the hand torque closed-loop controller can adjust the motor torque command for the assist motor or steering feel simulation motor, thereby reducing the steering hand torque during steering hold conditions and improving steering feel comfort. The software implementation and functional calibration of the technical solution in this embodiment are relatively straightforward to achieve, enabling effective optimization of the steering holding torque under a steering holding condition.

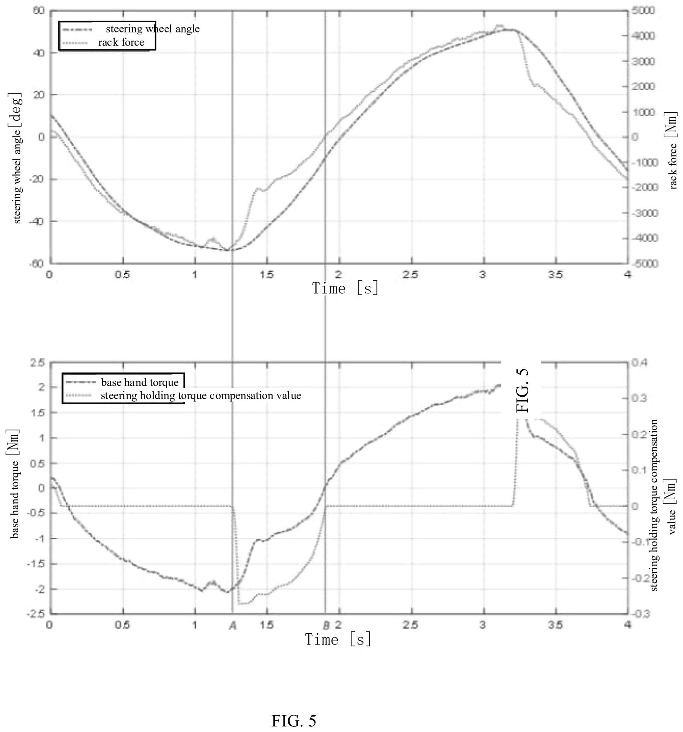

Based on the above embodiment, FIG. 5 is an effect diagram of the steering holding torque compensation value provided by the embodiment of the present disclosure. As shown in FIG. 5, before time A, the variation of the steering wheel angle is negative, accordingly, the steering holding torque compensation increment is negative. The sum of the historical steering holding torque compensation integral value and the steering holding torque compensation increment is less than 0, so the steering holding torque compensation value is 0, indicating a non-steering holding condition. At time A, the absolute value of the steering wheel angle begins to decrease, entering the steering holding condition. During the cumulative operation with the variation of the steering wheel angle, the steering holding torque compensation value quickly reaches the target upper limit for steering holding torque compensation and then outputs according to the target upper limit for steering holding torque compensation, finally stopping output at time B when the sign of the rack force reverses.

To sum up, in the method for compensating the steering holding torque provided by the embodiment of the present disclosure, considering that the absolute value of the rack force decreases as the road adhesion coefficient decreases, the rack force is used as an influencing factor for the steering holding torque compensation value. Based on the rack force together with the steering wheel angle and the vehicle speed, the preset steering holding torque compensation algorithm provided by the embodiment of the present disclosure is used to obtain the steering holding torque compensation value. The preset steering holding torque compensation algorithm is used to limit the upper limit of the steering holding torque compensation integral value and, under a steering holding condition, causes the steering holding torque compensation integral value to reach the upper limit and decrease as the absolute value of the rack force decreases. Moreover, the steering holding torque compensation integral value is the absolute value of the steering holding torque compensation value, enabling the steering holding torque compensation value to be dynamically adjusted according to the rack force. This allows the steering holding torque compensation value to adaptively decrease as the road adhesion coefficient decreases, avoiding overcompensation of steering holding torque on low-friction road surfaces and ensuring driving safety.

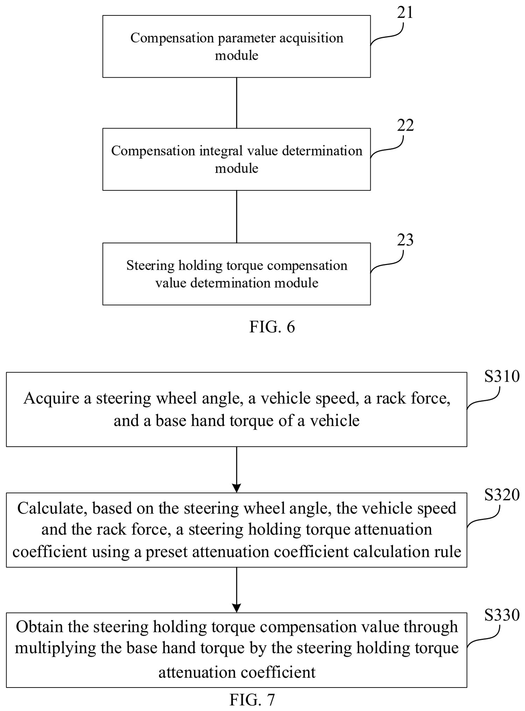

An embodiment of the present disclosure further provides an apparatus for compensating a steering holding torque corresponding to the method for compensating the steering holding torque provided by above. FIG. 6 is a structural block diagram of an apparatus for compensating a steering holding torque provided by an embodiment of the present disclosure. As shown in FIG. 6, the apparatus for compensating a steering holding torque includes a compensation parameter acquisition module 21, a compensation integral value determination module 22 and a steering holding torque compensation value determination module 23.

The compensation parameter acquisition module 21 is configured to acquire the steering wheel angle, the vehicle speed, and the rack force of the vehicle.

The compensation integral value determination module 22 is configured to determine a steering holding torque compensation integral value based on the steering wheel angle, the vehicle speed, and the rack force using a preset steering holding torque compensation algorithm. The steering holding torque compensation integral value represents the absolute value of the steering holding torque compensation value. The preset steering holding torque compensation algorithm is used to limit the upper limit of the steering holding torque compensation integral value and, under a steering holding condition, causes the steering holding torque compensation integral value to reach the upper limit and decrease as the absolute value of the rack force decreases.

The steering holding torque compensation value determination module 23 is configured to obtain a steering holding torque compensation value through multiplying the steering holding torque compensation integral value by the positive or negative sign of the rack force.

In some embodiments, the operations of determining the steering holding torque compensation integral value based on the steering wheel angle, the vehicle speed, and the rack force using a preset steering holding torque compensation algorithm includes:

determining a target upper limit for steering holding torque compensation based on the steering wheel angle, the vehicle speed, and the rack force; and

determining the steering holding torque compensation integral value based on the target upper limit for steering holding torque compensation, the steering wheel angle, and the vehicle speed.

In some embodiments, the compensation integral value determination module 22 is configured to:

obtain an initial upper limit for steering holding torque compensation corresponding to the vehicle speed and the absolute value of the rack force based on the vehicle speed, the absolute value of the rack force, and a first mapping relationship; where the first mapping relationship includes the correspondence among the vehicle speed, the absolute value of the rack force, and the initial upper limit for steering holding torque compensation; and

adjust the initial upper limit for steering holding torque compensation based on a relationship between signs of the steering wheel angle and the rack force, and obtain the target upper limit for steering holding torque compensation.

In some embodiments, the compensation integral value determination module 22 is further configured to:

take the initial upper limit for steering holding torque compensation as the target upper limit for steering holding torque compensation when the signs of the steering wheel angle and the rack force are same; and

take 0 as the target upper limit for steering holding torque compensation when the signs of the steering wheel angle and the rack force are opposite.

In some embodiments, the compensation integral value determination module 22 is further configured to:

obtain an integral gain corresponding to the vehicle speed based on the vehicle speed and a second mapping relationship, where the second mapping relationship includes the correspondence among the vehicle speed and the integral gain;

obtain a steering holding torque compensation increment through multiplying the variation of the steering wheel angle by the integral gain, where the variation of the steering wheel angle is the difference between the absolute value of the previous steering wheel angle and the absolute value of the current steering wheel angle, the previous steering wheel angle is the steering wheel angle in the previous operation cycle, and the current steering wheel angle is the steering wheel angle in the current operation cycle; and

limit the sum of the historical steering holding torque compensation integral value and the steering holding torque compensation increment based on the target upper limit for steering holding torque compensation and 0, and obtain the steering holding torque compensation integral value, where the historical steering holding torque compensation integral value is the steering holding torque compensation integral value in the previous operation cycle.

In some embodiments, the compensation integral value determination module 22 is further configured to:

take the sum of the historical steering holding torque compensation integral value and the steering holding torque compensation increment as the steering holding torque compensation integral value when the sum of the historical steering holding torque compensation integral value and the steering holding torque compensation increment is greater than or equal to 0 and less than or equal to the target upper limit for steering holding torque compensation; and

take 0 as the steering holding torque compensation integral value when the sum of the historical steering holding torque compensation integral value and the steering holding torque compensation increment is less than 0; and

take the target upper limit for steering holding torque compensation as the steering holding torque compensation integral value when the sum of the historical steering holding torque compensation integral value and the steering holding torque compensation increment is greater than the target upper limit for steering holding torque compensation.

In some embodiments, the apparatus for compensating a steering holding torque further includes a filtering module, configured to perform low-pass filtering on the steering wheel angle and the rack force before determining the steering holding torque compensation integral value based on the steering wheel angle, the vehicle speed, and the rack force using the preset steering holding torque compensation algorithm.
In some embodiments, the apparatus for compensating a steering holding torque further includes a reference hand torque calculation module. The reference hand torque calculation module is configured to:

acquire an initial base hand torque after the steering holding torque compensation value is obtained through multiplying the steering holding torque compensation integral value by the positive or negative sign of the rack force;

use a difference between the initial base hand torque and the steering holding torque compensation value as the target base hand torque; and

use the sum of the target base hand torque, a return-to-center torque, a damping torque, a simulated friction torque, and a rack end protection torque as the reference hand torque.

The apparatus for compensating a steering holding torque disclosed in the above embodiments can execute the method for compensating a steering holding torque disclosed in the above embodiments, and has the same or corresponding beneficial effects. To avoid repetition, details are not repeated here.

FIG. 7 is a flowchart of a method for compensating a steering holding torque provided by an embodiment of the present disclosure. This method is applicable to compensating the steering holding torque during the steering wheel return-to-center process. It can be applied to an Electric Power Steering (EPS) system or a Steer-By-Wire (SbW) system adopting hand torque closed-loop control to reduce a reference hand torque under the steering hold condition. Consequently, the hand torque closed-loop controller is used to adjust the motor torque command for the assist motor or steering feel simulation motor, thereby reducing the steering holding torque in such conditions and improving steering feel comfort. This method may be executed by an apparatus for compensating a steering holding torque, which may be implemented in software and/or hardware. As shown in FIG. 7, the method includes steps described below.

At S310, a steering wheel angle, a vehicle speed, a rack force, and a base hand torque of the vehicle are acquired.

For example, the steering wheel angle can be obtained by collecting the steering wheel angle information using a steering wheel angle sensor; the vehicle speed can be obtained by collecting the vehicle speed information using a speed sensor; and the rack force can be estimated by an existing rack force estimation module or through an existing rack force estimation method. Herein, the rack force refers to the steering resistance transmitted to the rack through the steering tie rod.

Furthermore, the base hand torque corresponding to the vehicle speed and the rack force can be determined based on the vehicle speed, the rack force, and a preset mapping relationship.

The preset mapping relationship includes the correspondence among the vehicle speed, the rack force, and the base hand torque. The preset mapping relationship may specifically be a two-dimensional mapping table including the correspondence among the rack force, the vehicle speed, and an initial base hand torque, which can be calibrated through real vehicle testing.

At S320, a steering holding torque attenuation coefficient is calculated based on the steering wheel angle, the vehicle speed, and the rack force using a preset attenuation coefficient calculation rule.

Here, the preset attenuation coefficient calculation rule is used to limit the upper limit of the absolute value of the steering holding torque compensation value using the steering holding torque attenuation coefficient and, under a steering holding condition, causes the absolute value of the steering holding torque compensation value to reach the upper limit and decrease as the absolute value of the rack force decreases.

At S330, the base hand torque is multiplied by the steering holding torque attenuation coefficient, and the steering holding torque compensation value is obtained.

In some embodiments, the step, in which the steering holding torque attenuation coefficient is calculated based on the steering wheel angle, the vehicle speed, and the rack force using a preset attenuation coefficient calculation rule, includes: determining a target upper limit of the steering holding torque attenuation coefficient based on the steering wheel angle, the vehicle speed, and the rack force; and calculating the steering holding torque attenuation coefficient based on the target upper limit of the steering holding torque attenuation coefficient, the steering wheel angle, and the vehicle speed.

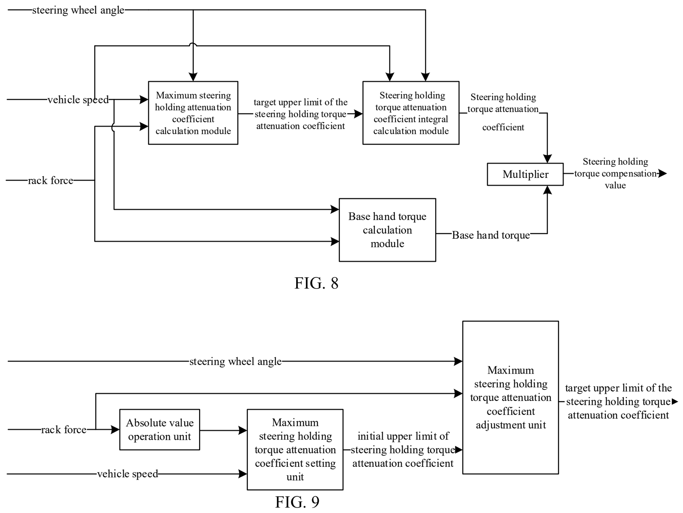

FIG. 8 shows a structural block diagram for executing the above method for compensating the steering holding torque. Specifically, as shown in FIG. 8, a base hand torque calculation module is configured to determine the base hand torque corresponding to the vehicle speed and the rack force based on the vehicle speed, the rack force, and a first mapping relationship. A maximum steering holding attenuation coefficient calculation module is configured to calculate the target upper limit of the steering holding torque attenuation coefficient based on the steering wheel angle, the vehicle speed, and the rack force, and output the target upper limit of the steering holding torque attenuation coefficient to a steering holding torque attenuation coefficient integral calculation module. The steering holding torque attenuation coefficient integral calculation module is configured to perform cumulative operations based on the target upper limit of the steering holding torque attenuation coefficient, the steering wheel angle, and the vehicle speed, obtain the steering holding torque attenuation coefficient and output the steering holding torque attenuation coefficient to a multiplier. The multiplier is configured to multiply the base hand torque by the steering holding torque attenuation coefficient and output the steering holding torque compensation value.

In some embodiments, the operation of calculating the target upper limit of the steering holding torque attenuation coefficient based on the steering wheel angle, the vehicle speed, and the rack force includes: obtaining an initial upper limit of steering holding torque attenuation coefficient corresponding to the vehicle speed and the absolute value of the rack force based on the vehicle speed, the absolute value of the rack force, and a third mapping relationship, where the third mapping relationship includes the correspondence among the vehicle speed, the absolute value of the rack force, and the initial upper limit of steering holding torque attenuation coefficient; and adjusting the initial upper limit of steering holding torque attenuation coefficient based on the relationship between signs of the steering wheel angle and the rack force, and obtaining the target upper limit of the steering holding torque attenuation coefficient.

Accordingly, as shown in FIG. 9, the maximum steering holding attenuation coefficient calculation module includes an absolute value operation unit, a maximum steering holding torque attenuation coefficient setting unit, and a maximum steering holding torque attenuation coefficient adjustment unit. The absolute value operation unit is configured to obtain the absolute value of the rack force by performing an absolute value operation on the rack force. The maximum steering holding torque attenuation coefficient setting unit is configured to obtain the initial upper limit of steering holding torque attenuation coefficient corresponding to the vehicle speed and the absolute value of the rack force based on the vehicle speed, the absolute value of the rack force, and the third mapping relationship. The maximum steering holding torque attenuation coefficient adjustment unit is configured to adjust the initial upper limit of steering holding torque attenuation coefficient based on the relationship between the signs of the steering wheel angle and the rack force, and obtain the target upper limit of the steering holding torque attenuation coefficient. The third mapping relationship may specifically be a two-dimensional mapping table including the correspondence among the vehicle speed, the absolute value of the rack force, and the initial upper limit of steering holding torque attenuation coefficient, which can be calibrated through real vehicle testing.

Specifically, the operations of adjusting the initial upper limit of steering holding torque attenuation coefficient based on the relationship between the signs of the steering wheel angle and the rack force and obtaining the target upper limit of the steering holding torque attenuation coefficient include: taking the initial upper limit of steering holding torque attenuation coefficient as the target upper limit of the steering holding torque attenuation coefficient when the signs of the steering wheel angle and the rack force are same; taking 0 as the target upper limit of the steering holding torque attenuation coefficient when the signs of the steering wheel angle and the rack force are opposite. In this embodiment, when the steering wheel returns to the vicinity of the center position, the variation of the positive/negative sign of the rack force is earlier than that of the steering wheel angle. At this moment, the rack force transitions from a return force to a steering resistance, and compensation for the steering holding torque is no longer required. Therefore, when the steering wheel angle and the rack force have opposite positive/negative signs, the target upper limit of the steering holding torque attenuation coefficient is set as 0. This prevents the erroneous application of holding torque compensation under the aforementioned conditions, thereby avoiding inappropriate compensation that would create a steering feel inconsistent with the actual driving scenario. This approach optimizes the steering feel and enhances steering comfort.

In some embodiments, the operations of calculating the steering holding torque attenuation coefficient based on the target upper limit of the steering holding torque attenuation coefficient, the steering wheel angle, and the vehicle speed includes: obtaining an integral gain corresponding to the vehicle speed based on the vehicle speed and a fourth mapping relationship, where the fourth mapping relationship includes the correspondence between the vehicle speed and the integral gain; multiplying the variation of the steering wheel angle by the integral gain, and obtaining the torque attenuation coefficient increment, where the variation of the steering wheel angle is the difference between the absolute value of the previous steering wheel angle and the absolute value of the current steering wheel angle, the previous steering wheel angle being the steering wheel angle in the previous operation cycle, and the current steering wheel angle being the steering wheel angle in the current operation cycle; limiting the sum of the historical steering holding torque attenuation coefficient and the torque attenuation coefficient increment based on the target upper limit of the steering holding torque attenuation coefficient and 0, obtain the steering holding torque attenuation coefficient. The historical steering holding torque attenuation coefficient is the steering holding torque attenuation coefficient in the previous operation cycle.

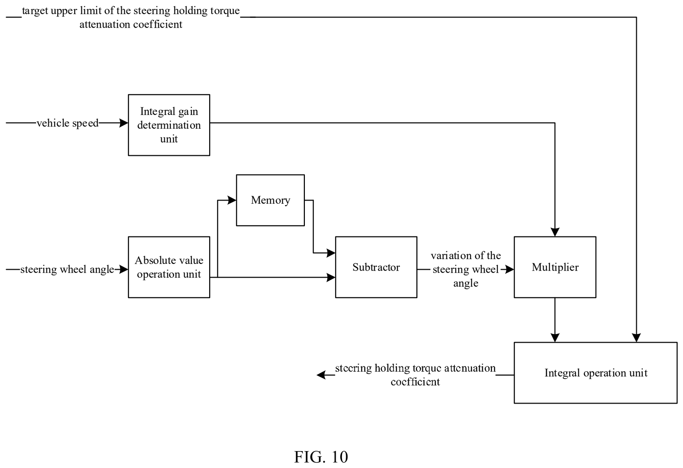

Accordingly, as shown in FIG. 10, the steering holding torque attenuation coefficient integration calculation module includes an integral gain determination unit, an absolute value operation unit, a memory, a subtractor, a multiplier, and an integral operation unit. The integral gain determination unit is configured to obtain the integral gain corresponding to the vehicle speed based on the vehicle speed and the fourth mapping relationship, and output the integral gain to the multiplier. The absolute value operation unit is configured to obtain the absolute value of the steering wheel angle by performing an absolute value operation on the steering wheel angle. The memory stores the absolute value of the steering wheel angle obtained each time. The subtractor is configured to subtract the absolute value of the steering wheel angle stored in the memory during the previous operation (i.e., the absolute value of the previous steering wheel angle) from the absolute value of the current steering wheel angle, obtain the variation of the steering wheel angle, and output the variation of the steering wheel angle to the multiplier. The multiplier is configured to multiply the integral gain by the variation of the steering wheel angle, obtain the torque attenuation coefficient increment, and output the torque attenuation coefficient increment to the integral operation unit. The integral operation unit is configured to sum the historical steering holding torque attenuation coefficient and the torque attenuation coefficient increment, limit an upper limit and a lower limit of the sum of the historical steering holding torque attenuation coefficient and the torque attenuation coefficient increment, and obtain the steering holding torque attenuation coefficient, the upper limit being set to the target upper limit of the steering holding torque attenuation coefficient, the lower limit being set to 0. The fourth mapping relationship may specifically be a one-dimensional mapping table including the correspondence between the vehicle speed and the integral gain, which can be calibrated through real vehicle testing.

Specifically, the operations of limit the sum of the historical steering holding torque attenuation coefficient and the torque attenuation coefficient increment based on the target upper limit of the steering holding torque attenuation coefficient and 0, and obtaining the steering holding torque attenuation coefficient include: taking the sum of the historical steering holding torque attenuation coefficient and the torque attenuation coefficient increment as the steering holding torque attenuation coefficient when the sum is greater than or equal to 0 and less than or equal to the target upper limit of the steering holding torque attenuation coefficient; taking 0 as the steering holding torque attenuation coefficient when the sum is less than 0; taking the target upper limit of the steering holding torque attenuation coefficient as the steering holding torque attenuation coefficient when the sum is greater than the target upper limit of the steering holding torque attenuation coefficient.

Therefore, the steering holding torque attenuation coefficient $y_n$ can be expressed by the following formula, where the target upper limit of the steering holding torque attenuation coefficient is abbreviated as the target attenuation coefficient upper limit:

$$y_n = \begin{cases} y_{n-1} + x_n, & 0 \leq y_{n-1} + x_n \leq \text{target attenuation coefficient upper limitt} \\ 0, & y_{n-1} + x_n < 0 \\ \text{target attenuation coefficient upper limit,} & y_{n-1} + x_n > \text{target attenuation coefficient upper limit} \end{cases}$$

Here, $n$ represents the $n$-th operation cycle; $y_{n-1}$ is the historical steering holding torque attenuation coefficient; $x_n$ is the torque attenuation coefficient increment. It should be noted that the steering holding torque attenuation coefficient at the initial moment can be set to 0.

Furthermore, when $y_n = 0$, it indicates that the current condition is not the steering holding condition, and no steering holding torque compensation is required; when $y_n = y_{n-1} + x_n$, it indicates that the current condition is in a transition stage between the steering holding condition and non-steering holding condition, and this process enables smooth transition of the steering holding torque compensation; when $y_n =$ the target upper limit of the steering holding torque attenuation coefficient, it indicates that the current condition is the steering holding condition, and the steering wheel angle is currently stably within the steering holding region. Therefore, the present disclosure can utilize the steering holding torque attenuation coefficient to determine whether the vehicle is in the steering holding condition, without the need for a separate complex algorithm to identify the steering holding condition.

In some embodiments, after the step, in which the steering wheel angle, the vehicle speed, the rack force, and the base hand torque of the vehicle are acquired, the method further includes: performing low-pass filtering on the steering wheel angle and the rack force. This can filter out noise signals in the steering wheel angle and the rack force and make the signals of the steering wheel angle and the rack force more stable, avoiding interference from noise signals and fluctuations in signals of the steering wheel angle and the rack force on the calculation of the steering holding torque compensation value, and improving the accuracy of the steering holding torque compensation value.

In some embodiments, after the step, in which the steering holding torque compensation value is obtained through multiplying the base hand torque by the steering holding torque attenuation coefficient, the method further includes: using the difference between the initial base hand torque and the steering holding torque compensation value as a target base hand torque; and using the sum of the target base hand torque, a return-to-center torque, a damping torque, a simulated friction torque, and a rack end protection torque as a reference hand torque. In this embodiment, the target base hand torque is obtained by subtracting the steering holding torque compensation value from the initial base hand torque, thereby achieving compensation of the initial base hand torque based on the steering holding torque compensation value. A return-to-center torque calculated by a return-to-center torque module, a damping torque calculated by a damping torque module, a simulated friction torque calculated by a simulated friction torque module, and a rack end protection torque calculated by a rack end protection torque module are summed with the target base hand torque in an adder. This summation yields the reference hand torque, which represents the hand torque expected to be felt by the driver under current conditions. Consequently, the hand torque closed-loop controller can adjust the motor torque command for the assist motor or steering feel simulation motor, thereby reducing the steering hand torque during steering hold conditions and improving steering feel comfort. The software implementation and functional calibration of the technical solution in this embodiment are relatively straightforward to achieve, enabling effective optimization of the steering holding torque under a steering holding condition.

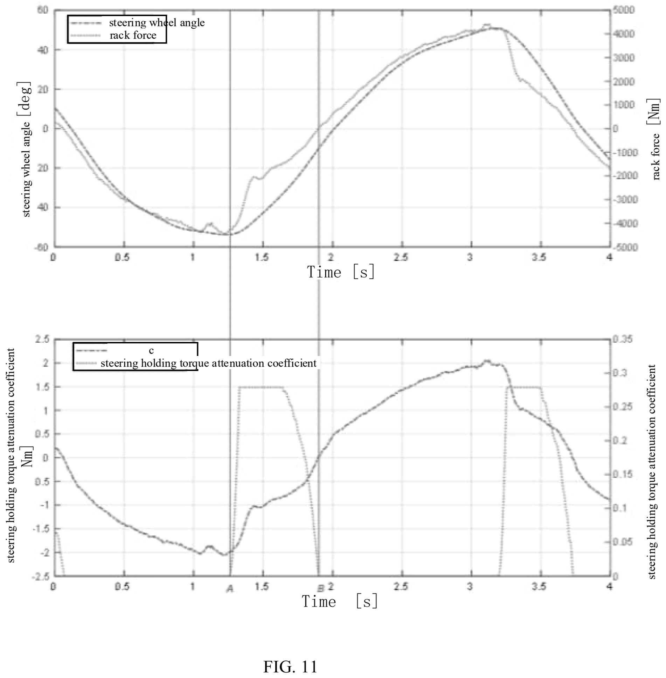

Based on the above embodiment, FIG. 11 is an effect diagram of the steering holding torque compensation value provided by the embodiment of the present disclosure. As shown in FIG. 11, before time A, the variation of the steering wheel angle is negative, accordingly, the torque attenuation coefficient increment is negative. The sum of the historical steering holding torque attenuation coefficient and the torque attenuation coefficient increment is less than 0, so the steering holding torque attenuation coefficient is 0, indicating a non-steering holding condition. At time A, the absolute value of the steering wheel angle begins to decrease, entering the steering holding condition. During the cumulative operation with the variation of the steering wheel angle, the steering holding torque attenuation coefficient quickly reaches the target upper limit of the steering holding torque attenuation coefficient and then outputs according to the target upper limit of the steering holding torque attenuation coefficient, finally stopping output at time B when the sign of the rack force reverses.

To sum up, in the method for compensating the steering holding torque provided by the embodiment of the present disclosure, considering that the absolute value of the rack force decreases as the road adhesion coefficient decreases, the rack force is used as an influencing factor for the steering holding torque compensation value. Based on the rack force together with the steering wheel angle and the vehicle speed, the preset attenuation coefficient calculation rule provided by the embodiment of the present disclosure is used to obtain the steering holding torque attenuation coefficient. The steering holding torque attenuation coefficient is used to limit the upper limit of the absolute value of the steering holding torque compensation value and, under a steering holding condition, causes the absolute value of the steering holding torque compensation value to reach the upper limit and decrease as the absolute value of the rack force decreases. This enables the steering holding torque compensation value to be dynamically adjusted according to the rack force, thereby allowing the steering holding torque compensation value to adaptively decrease as the road adhesion coefficient decreases, avoiding overcompensation of steering holding torque on low-friction road surfaces and ensuring driving safety.

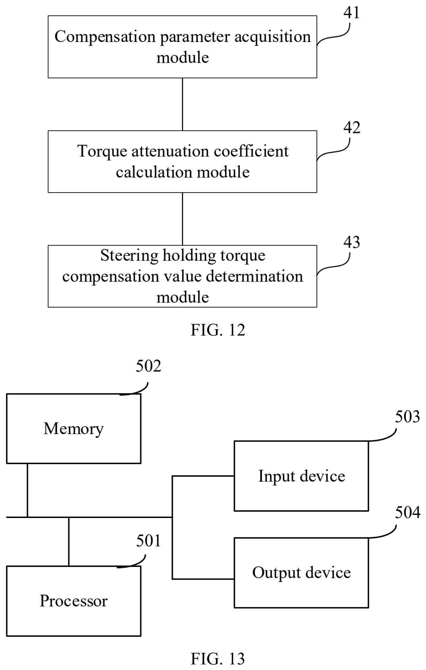

An embodiment of the present disclosure further provides an apparatus for compensating a steering holding torque corresponding to the method for compensating the steering holding torque provided by above. FIG. 12 is a structural block diagram of an apparatus for compensating a steering holding torque provided by the embodiment of the present disclosure. As shown in FIG. 12, the apparatus for compensating a steering holding torque includes a compensation parameter acquisition module 41, a torque attenuation coefficient calculation module 42 and a steering holding torque compensation value determination module 43.

The compensation parameter acquisition module 41 is configured to acquire the steering wheel angle, the vehicle speed, the rack force, and the base hand torque of the vehicle.

The torque attenuation coefficient calculation module 42 is configured to calculate, based on the steering wheel angle, the vehicle speed and the rack force, the steering holding torque attenuation coefficient using a preset attenuation coefficient calculation rule. The preset attenuation coefficient calculation rule is used to utilize the steering holding torque attenuation coefficient to limit the upper limit of the absolute value of the steering holding torque compensation value and, under the steering holding condition, cause the absolute value of the steering holding torque compensation value to reach the upper limit and decrease as the absolute value of the rack force decreases.

The steering holding torque compensation value determination module 43 is configured to multiply the base hand torque by the steering holding torque attenuation coefficient, and obtain the steering holding torque compensation value.

In some embodiments, the torque attenuation coefficient calculation module 42 is configured to: determine a target upper limit of the steering holding torque attenuation coefficient based on the steering wheel angle, the vehicle speed, and the rack force; and calculate the steering holding torque attenuation coefficient based on the target upper limit of the steering holding torque attenuation coefficient, the steering wheel angle, and the vehicle speed.

In some embodiments, the torque attenuation coefficient calculation module 42 is configured to:

obtain, based on the vehicle speed, the absolute value of the rack force and a first mapping relationship, an initial upper limit of steering holding torque attenuation coefficient corresponding to the vehicle speed and the absolute value of the rack force, where the first mapping relationship includes the correspondence among the vehicle speed, the absolute value of the rack force, and the initial upper limit of steering holding torque attenuation coefficient; and

adjust the initial upper limit of steering holding torque attenuation coefficient based on a relationship between signs of the steering wheel angle and the rack force, and obtain the target upper limit of the steering holding torque attenuation coefficient.

In some embodiments, the torque attenuation coefficient calculation module 42 is further configured to:

take the initial upper limit of steering holding torque attenuation coefficient as the target upper limit of the steering holding torque attenuation coefficient when the positive/negative signs of the steering wheel angle and the rack force are same;

take 0 as the target upper limit of the steering holding torque attenuation coefficient when the positive/negative signs of the steering wheel angle and the rack force are opposite.

In some embodiments, the torque attenuation coefficient calculation module 42 is further configured to:

obtain, based on the vehicle speed and a second mapping relationship, an integral gain corresponding to the vehicle speed, where the second mapping relationship includes the correspondence between the vehicle speed and the integral gain;

multiply the variation of the steering wheel angle by the integral gain and obtain the torque attenuation coefficient increment, where the variation of the steering wheel angle is the difference between the absolute value of the previous steering wheel angle and the absolute value of the current steering wheel angle, the previous steering wheel angle being the steering wheel angle in the previous operation cycle, and the current steering wheel angle being the steering wheel angle in the current operation cycle; and

limit a sum of the historical steering holding torque attenuation coefficient and the torque attenuation coefficient increment based on the target upper limit of the steering holding torque attenuation coefficient and 0, obtain the steering holding torque attenuation coefficient, where the historical steering holding torque attenuation coefficient is the steering holding torque attenuation coefficient in the previous operation cycle.

In some embodiments, the torque attenuation coefficient calculation module 42 is further configured to:

take the sum the historical steering holding torque attenuation coefficient and the torque attenuation coefficient increment as the steering holding torque attenuation coefficient when the sum is greater than or equal to 0 and less than or equal to the target upper limit of the steering holding torque attenuation coefficient;

take 0 as the steering holding torque attenuation coefficient when the sum of the historical steering holding torque attenuation coefficient and the torque attenuation coefficient increment is less than 0;

take the target upper limit of the steering holding torque attenuation coefficient as the steering holding torque attenuation coefficient when the sum of the historical steering holding torque attenuation coefficient and the torque attenuation coefficient increment is greater than the target upper limit of the steering holding torque attenuation coefficient.

In some embodiments, the apparatus for compensating a steering holding torque further includes a filtering module, configured to:
perform low-pass filtering on the steering wheel angle and rack force after the steering wheel angle, the vehicle speed, the rack force and base hand torque of the vehicle are obtained.

In some embodiments, the apparatus for compensating a steering holding torque further includes a reference hand torque calculation module. The reference hand torque calculation module is configured to:

take the difference between the initial base hand torque and the steering holding torque compensation value as the target base hand torque after the base hand torque is multiplied by the steering holding torque attenuation coefficient and the steering holding torque compensation value is obtained; and

take the sum of the target base hand torque, the return-to-center torque, the damping torque, the simulated friction torque, and the rack end protection torque as the reference hand torque.

The apparatus for compensating a steering holding torque disclosed in the above embodiments can execute the method for compensating a steering holding torques disclosed in the various embodiments and has the same or corresponding beneficial effects. To avoid repetition, details are not repeated here.

An embodiment of the present disclosure also provides a computer-readable storage medium storing a program or instructions that cause a computer to execute the steps of any of the above methods.

For example, the program or instructions cause the computer to execute a method for compensating a steering holding torque, the method including:

acquiring a steering wheel angle, a vehicle speed, and a rack force of a vehicle;

determining, based on the steering wheel angle, the vehicle speed and the rack force, a steering holding torque compensation integral value using a preset steering holding torque compensation algorithm, where the steering holding torque compensation integral value represents the absolute value of the steering holding torque compensation value, the preset steering holding torque compensation algorithm is used to limit the upper limit of the steering holding torque compensation integral value and, under a steering holding condition, causes the steering holding torque compensation integral value to reach the upper limit and decrease as the absolute value of the rack force decreases; and

multiplying the steering holding torque compensation integral value by a positive or negative sign of the rack force, and obtaining the steering holding torque compensation value.

For example, the program or instructions cause the computer to execute a method for compensating a steering holding torque, the method including:

acquiring a steering wheel angle, a vehicle speed, a rack force, and a base hand torque of a vehicle;

calculating, based on the steering wheel angle, the vehicle speed and the rack force, a steering holding torque attenuation coefficient using a preset attenuation coefficient calculation rule, where the preset attenuation coefficient calculation rule is used to limit the upper limit of the absolute value of the steering holding torque compensation value using the steering holding torque attenuation coefficient and, under a steering holding condition, cause the absolute value of the steering holding torque compensation value to reach the upper limit and decrease as the absolute value of the rack force decreases; and

multiplying the base hand torque by the steering holding torque attenuation coefficient, and obtaining the steering holding torque compensation value.

Optionally, when executed by a computer processor, the computer-executable instructions may also be used to implement any of the technical solutions of the method for compensating a steering holding torques provided by the embodiments of the present disclosure, achieving corresponding beneficial effects.

Through the above description of the implementation methods, those skilled in the art can clearly understand that the embodiments of the present disclosure can be implemented by means of software and necessary general-purpose hardware, or of course, through hardware. However, in many cases, the former is a better implementation. Based on this understanding, the technical solutions of the embodiments of the present disclosure, in essence or the part contributing to the prior art, can be embodied in the form of a software product. This computer software product can be stored in a computer-readable storage medium, such as a floppy disk, read-only memory (ROM), random access memory (RAM), flash memory (FLASH), hard disk, or optical disk of a computer, and includes several instructions to enable a computer device (which may be a personal computer, server, or network device, etc.) to execute the methods described in the various embodiments of the present disclosure.

An embodiment of the present disclosure also provides a vehicle, including: one or more processors; a memory for storing one or more programs or instructions. The processor calls the programs or instructions stored in the memory to execute the steps of any of the above methods, thereby achieving corresponding beneficial effects.

FIG. 13 is a schematic diagram of the hardware structure of a vehicle provided by an embodiment of the present disclosure. As shown in FIG. 13, the vehicle includes one or more processors 501 and a memory 502.

The processor 501 can be a central processing unit (CPU) or other forms of processing units with data processing capabilities and/or instruction execution capabilities, and can control other components in the vehicle to perform desired functions.

The memory 502 can include one or more computer program products. The computer program products can include various forms of computer-readable storage media, such as volatile memory and/or non-volatile memory. The volatile memory can include, for example, random access memory (RAM) and/or cache memory. The non-volatile memory can include, for example, read-only memory (ROM), hard disks, flash memory, etc. One or more computer program instructions can be stored on the computer-readable storage medium, and the processor 501 can run the program instructions to implement the method for compensating a steering holding torque of the embodiments of the present disclosure described above and/or other desired functions. Various contents such as input signals, signal components, and noise components can also be stored in the computer-readable storage medium.

In one example, the vehicle can further include: an input device 503 and an output device 504 that are connected through a bus system and/or other forms of connection mechanisms (not shown).

Furthermore, the input device 503 can include, for example, a keyboard, mouse, etc.

The output device 504 can output various information to the outside, including determined distance information, direction information, etc. The output device 504 can include, for example, a display, speaker, printer, and communication network and its connected remote output devices, etc.

Of course, for simplicity, FIG. 13 only shows some of the components in the vehicle related to the present disclosure, omitting components such as buses, input/output interfaces, etc. In addition, depending on the specific application, the vehicle can include any other appropriate components.

It should be noted that, in this document, relational terms such as "first" and "second" are used only to distinguish one entity or operation from another entity or operation, and do not necessarily require or imply any actual such relationship or order between these entities or operations. Furthermore, the terms "comprises," "comprising," or any other variation thereof are intended to cover a non-exclusive inclusion, such that a process, method, article, or device that includes a list of elements does not include only those elements but may include other elements not expressly listed or inherent to such process, method, article, or device. Without further limitation, an element defined by the phrase "comprising a..." does not exclude the presence of additional identical elements in the process, method, article, or device that comprises the element.

In the description provided herein, numerous specific details are set forth. However, it is understood that the embodiments of the present disclosure can be practiced without these specific details. In some instances, well-known methods, structures, and techniques have not been shown in detail in order not to obscure the understanding of this description.

The above description is only specific embodiments of the present disclosure. Those skilled in the art can understand or implement the present disclosure based on the above embodiments. Various modifications to these embodiments will be apparent to those skilled in the art, and the general principles defined herein can be implemented in other embodiments without departing from the spirit or scope of the present disclosure. Therefore, the present disclosure will not be limited to the embodiments described herein, but shall conform to the widest scope consistent with the principles and novel features disclosed herein.

## Claims

1. A method for compensating a steering holding torque, comprising:

    acquiring a steering wheel angle, a vehicle speed, and a rack force of a vehicle;
    determining, based on the steering wheel angle, the vehicle speed and the rack force, a steering holding torque compensation integral value using a preset steering holding torque compensation algorithm, wherein the steering holding torque compensation integral value represents an absolute value of a steering holding torque compensation value, and the preset steering holding torque compensation algorithm is used to limit an upper limit of the steering holding torque compensation integral value and, under a steering holding condition, causes the steering holding torque compensation integral value to reach the upper limit and decrease as an absolute value of the rack force decreases; and
    obtaining the steering holding torque compensation value through multiplying the steering holding torque compensation integral value by a positive or negative sign of the rack force.

2. The method according to claim 1, wherein the determining, based on the steering wheel angle, the vehicle speed and the rack force, a steering holding torque compensation integral value using a preset steering holding torque compensation algorithm comprises:

    determining a target upper limit for steering holding torque compensation based on the steering wheel angle, the vehicle speed, and the rack force; and
    determining the steering holding torque compensation integral value based on the target upper limit for steering holding torque compensation, the steering wheel angle, and the vehicle speed.

3. The method according to claim 2, wherein the determining a target upper limit for steering holding torque compensation based on the steering wheel angle, the vehicle speed, and the rack force comprises:

    obtaining, based on the vehicle speed, the absolute value of the rack force and a first mapping relationship, an initial upper limit for steering holding torque compensation corresponding to the vehicle speed and the absolute value of the rack force, wherein the first mapping relationship comprises a correspondence among the vehicle speed, the absolute value of the rack force, and the initial upper limit for steering holding torque compensation; and
    obtaining the target upper limit for steering holding torque compensation by adjusting the initial upper limit for steering holding torque compensation based on a relationship between positive or negative signs of the steering wheel angle and the rack force.

4. The method according to claim 3, wherein the obtaining the target upper limit for steering holding torque compensation by adjusting the initial upper limit for steering holding torque compensation based on a relationship between positive or negative signs of the steering wheel angle and the rack force comprises:

    taking the initial upper limit for steering holding torque compensation as the target upper limit for steering holding torque compensation when signs of the steering wheel angle and the rack force are same; or
    taking 0 as the target upper limit for steering holding torque compensation when signs of the steering wheel angle and the rack force are opposite.

5. The method according to claim 2, wherein the determining the steering holding torque compensation integral value based on the target upper limit for steering holding torque compensation, the steering wheel angle, and the vehicle speed comprises:

obtaining an integral gain corresponding to the vehicle speed based on the vehicle speed and a second mapping relationship, wherein the second mapping relationship comprises a correspondence between the vehicle speed and the integral gain;

obtaining a steering holding torque compensation increment through multiplying a variation of the steering wheel angle by the integral gain, wherein the variation of the steering wheel angle is a difference between an absolute value of a previous steering wheel angle and an absolute value of a current steering wheel angle, the previous steering wheel angle is the steering wheel angle in a previous operation cycle, and the current steering wheel angle is the steering wheel angle in a current operation cycle;

obtaining the steering holding torque compensation integral value through limiting, based on the target upper limit for steering holding torque compensation and 0, a sum of a historical steering holding torque compensation integral value and the steering holding torque compensation increment, wherein the historical steering holding torque compensation integral value is the steering holding torque compensation integral value in the previous operation cycle.

6. The method according to claim 5, wherein the obtaining the steering holding torque compensation integral value through limiting, based on the target upper limit for steering holding torque compensation and 0, a sum of a historical steering holding torque compensation integral value and the steering holding torque compensation increment comprises:

taking the sum of the historical steering holding torque compensation integral value and the steering holding torque compensation increment as the steering holding torque compensation integral value when the sum is greater than or equal to 0 and less than or equal to the target upper limit for steering holding torque compensation;

taking 0 as the steering holding torque compensation integral value when the sum of the historical steering holding torque compensation integral value and the steering holding torque compensation increment is less than 0;

taking the target upper limit for steering holding torque compensation as the steering holding torque compensation integral value when the sum of the historical steering holding torque compensation integral value and the steering holding torque compensation increment is greater than the target upper limit for steering holding torque compensation.

7. The method according to any one of claims 1 to 6, wherein before the determining, based on the steering wheel angle, the vehicle speed and the rack force, a steering holding torque compensation integral value using a preset steering holding torque compensation algorithm, the method further comprises:
performing low-pass filtering on the steering wheel angle and the rack force.

8. An apparatus for compensating a steering holding torque, comprising:

a compensation parameter acquisition module, configured to acquire a steering wheel angle, a vehicle speed, and a rack force of a vehicle;

a compensation integral value determination module, configured to determine, based on the steering wheel angle, the vehicle speed and the rack force, a steering holding torque compensation integral value using a preset steering holding torque compensation algorithm, wherein the steering holding torque compensation integral value represents an absolute value of a steering holding torque compensation value, and the preset steering holding torque compensation algorithm is used to limit an upper limit of the steering holding torque compensation integral value and, under a steering holding condition, causes the steering holding torque compensation integral value to reach the upper limit and decrease as an absolute value of the rack force decreases; and

a steering holding torque compensation value determination module, configured to obtain the steering holding torque compensation value through multiplying the steering holding torque compensation integral value by a positive or negative sign of the rack force.

9. A method for compensating a steering holding torque, comprising:

acquiring a steering wheel angle, a vehicle speed, a rack force, and a base hand torque of a vehicle;

calculating, based on the steering wheel angle, the vehicle speed and the rack force, a steering holding torque attenuation coefficient using a preset attenuation coefficient calculation rule, wherein the preset attenuation coefficient calculation rule is used to limit an upper limit of an absolute value of a steering holding torque compensation value using the steering holding torque attenuation coefficient and, under a steering holding condition, causes the absolute value of the steering holding torque compensation value to reach the upper limit and decrease as an absolute value of the rack force decreases; and

obtaining the steering holding torque compensation value through multiplying the base hand torque by the steering holding torque attenuation coefficient.

10. The method according to claim 9, wherein the calculating, based on the steering wheel angle, the vehicle speed and the rack force, a steering holding torque attenuation coefficient using a preset attenuation coefficient calculation rule comprises:

determining a target upper limit of the steering holding torque attenuation coefficient based on the steering wheel angle, the vehicle speed, and the rack force; and

calculating the steering holding torque attenuation coefficient based on the target upper limit of the steering holding torque attenuation coefficient, the steering wheel angle, and the vehicle speed.

11. The method according to claim 10, wherein the determining a target upper limit of the steering holding torque attenuation coefficient based on the steering wheel angle, the vehicle speed, and the rack force comprises:

obtaining, based on the vehicle speed, the absolute value of the rack force and a third mapping relationship, an initial upper limit of steering holding torque attenuation coefficient corresponding to the vehicle speed and the absolute value of the rack force, wherein the third mapping relationship comprises a correspondence among the vehicle speed, the absolute value of the rack force, and the initial upper limit of steering holding torque attenuation coefficient; and

obtaining the target upper limit of the steering holding torque attenuation coefficient through adjusting, based on a relationship between signs of the steering wheel angle and the rack force, the initial upper limit of steering holding torque attenuation coefficient.

12. The method according to claim 11, wherein the obtaining the target upper limit of the steering holding torque attenuation coefficient through adjusting, based on a relationship between signs of the steering wheel angle and the rack force, the initial upper limit of steering holding torque attenuation coefficient comprises:

taking the initial upper limit of steering holding torque attenuation coefficient as the target upper limit of the steering holding torque attenuation coefficient when the signs of the steering wheel angle and the rack force are same; or

taking 0 as the target upper limit of the steering holding torque attenuation coefficient when the signs of the steering wheel angle and the rack force are opposite.

13. The method according to claim 10, wherein the calculating the steering holding torque attenuation coefficient based on the target upper limit of the steering holding torque attenuation coefficient, the steering wheel angle, and the vehicle speed comprises:

obtaining, based on the vehicle speed and a fourth mapping relationship, an integral gain corresponding to the vehicle speed, wherein the fourth mapping relationship comprises a correspondence between the vehicle speed and the integral gain;

obtaining a torque attenuation coefficient increment through multiplying a variation of the steering wheel angle by the integral gain, wherein the variation of the steering wheel angle is a difference between an absolute value of a previous steering wheel angle and an absolute value of a current steering wheel angle, the previous steering wheel angle is the steering wheel angle in a previous operation cycle, and the current steering wheel angle is the steering wheel angle in a current operation cycle; and

obtaining the steering holding torque attenuation coefficient through limiting, based on the target upper limit of the steering holding torque attenuation coefficient and 0, a sum of a historical steering holding torque attenuation coefficient and the torque attenuation coefficient increment, wherein the historical steering holding torque attenuation coefficient is the steering holding torque attenuation coefficient in the previous operation cycle.

14. The method according to claim 13, wherein the obtaining the steering holding torque attenuation coefficient through limiting, based on the target upper limit of the steering holding torque attenuation coefficient and 0, a sum of a historical steering holding torque attenuation coefficient and the torque attenuation coefficient increment comprises:

taking the sum of the historical steering holding torque attenuation coefficient and the torque attenuation coefficient increment as the steering holding torque attenuation coefficient when the sum is greater than or equal to 0 and less than or equal to the target upper limit of the steering holding torque attenuation coefficient;
taking 0 as the steering holding torque attenuation coefficient when the sum of the historical steering holding torque attenuation coefficient and the torque attenuation coefficient increment is less than 0;
taking the target upper limit of the steering holding torque attenuation coefficient as the steering holding torque attenuation coefficient when the sum of the historical steering holding torque attenuation coefficient and the torque attenuation coefficient increment is greater than the target upper limit of the steering holding torque attenuation coefficient.

15. The method according to any one of claims 9 to 14, wherein after the acquiring a steering wheel angle, a vehicle speed, a rack force, and a base hand torque of a vehicle, the method further comprises:
performing low-pass filtering on the steering wheel angle and the rack force.

16. An apparatus for compensating a steering holding torque, comprising:

a compensation parameter acquisition module, configured to acquire a steering wheel angle, a vehicle speed, a rack force, and a base hand torque of a vehicle;
a torque attenuation coefficient calculation module, configured to calculate, based on the steering wheel angle, the vehicle speed and the rack force, a steering holding torque attenuation coefficient using a preset attenuation coefficient calculation rule, wherein the preset attenuation coefficient calculation rule is used to limit an upper limit of an absolute value of a steering holding torque compensation value using the steering holding torque attenuation coefficient and, under a steering holding condition, causes the absolute value of the steering holding torque compensation value to reach the upper limit and decrease as an absolute value of the rack force decreases; and
a steering holding torque compensation value determination module, configured to obtain the steering holding torque compensation value through multiplying the base hand torque by the steering holding torque attenuation coefficient.

17. A computer-readable storage medium, wherein the computer-readable storage medium is stored with a program or instructions, and the program or instructions cause a computer to execute the steps of the method according to any one of claims 1 to 7 or the steps of the method according to any one of claims 9 to 15.

18. A vehicle, comprising:

one or more processors;
a memory, configured to store one or more programs or instructions;
wherein the processor is configured to call the programs or instructions stored in the memory, and execute the steps of the method according to any one of claims 1 to 7 or the steps of the method according to any one of claims 9 to 15.

19. A computer program, comprising computer-readable code, wherein when the computer-readable code is run on a computer, the computer is caused to execute the steps of the method according to any one of claims 1 to 7 or the steps of the method according to any one of claims 9 to 15.

Acquire a steering wheel angle, a vehicle speed, and a rack force of a vehicle — S110

Determine, based on the steering wheel angle, the vehicle speed and the rack force, a steering holding torque compensation integral value using a preset steering holding torque compensation algorithm — S120

Obtain the steering holding torque compensation value through multiplying the steering holding torque compensation integral value by a positive or negative sign of the rack force — S130

FIG. 1

steering wheel angle

vehicle speed

rack force

Maximum steering holding compensation torque calculation module

target upper limit for steering holding torque compensation

Steering holding torque compensation value integration calculation module

steering holding torque compensation integral value

Sign operation module

sign of the rack force

X

steering holding torque compensation value

FIG. 2

steering wheel angle

rack force

Absolute value operation unit

Maximum steering holding torque compensation value setting unit

initial upper limit for steering holding torque compensation

Maximum steering holding torque compensation value adjustment unit

Target upper limit for steering holding torque compensation

vehicle speed

FIG. 3

target upper limit for steering holding
torque compensation

vehicle speed → Integral gain determination unit

Memory

steering wheel angle → Absolute value operation unit

Subtractor

variation of the steering wheel angle →

Multiplier

steering holding torque compensation integral value ←

Integral operation unit

FIG. 4

FIG. 5

| Compensation parameter acquisition module | 21 |

| Compensation integral value determination module | 22 |

| Steering holding torque compensation value determination module | 23 |

FIG. 6

| Acquire a steering wheel angle, a vehicle speed, a rack force, and a base hand torque of a vehicle | S310 |

| Calculate, based on the steering wheel angle, the vehicle speed and the rack force, a steering holding torque attenuation coefficient using a preset attenuation coefficient calculation rule | S320 |

| Obtain the steering holding torque compensation value through multiplying the base hand torque by the steering holding torque attenuation coefficient | S330 |

FIG. 7

steering wheel angle

vehicle speed

| Maximum steering holding attenuation coefficient calculation module | target upper limit of the steering holding torque attenuation coefficient | Steering holding torque attenuation coefficient integral calculation module | Steering holding torque attenuation coefficient |

rack force

| Base hand torque calculation module | Base hand torque |

Multiplier — Steering holding torque compensation value

FIG. 8

steering wheel angle

rack force

| Absolute value operation unit | Maximum steering holding torque attenuation coefficient setting unit | initial upper limit of steering holding torque attenuation coefficient | Maximum steering holding torque attenuation coefficient adjustment unit | target upper limit of the steering holding torque attenuation coefficient |

vehicle speed

FIG. 9

FIG. 10

FIG. 11

Compensation parameter acquisition module — 41

Torque attenuation coefficient calculation module — 42

Steering holding torque compensation value determination module — 43

FIG. 12

502 — Memory

503 — Input device

501 — Processor

504 — Output device

FIG. 13

## INTERNATIONAL SEARCH REPORT

| International application No. |
| --- |
| **PCT/CN2024/100467** |

**A.    CLASSIFICATION OF SUBJECT MATTER**

B62D5/04(2006.01)i;  B62D6/00(2006.01)i

According to International Patent Classification (IPC) or to both national classification and IPC

**B.    FIELDS SEARCHED**

Minimum documentation searched (classification system followed by classification symbols)

IPC:  B62D

Documentation searched other than minimum documentation to the extent that such documents are included in the fields searched

Electronic data base consulted during the international search (name of data base and, where practicable, search terms used)

CNTXT, ENTXTC, ENTXT, VEN, CNKI: 保舵, 回正, 力矩, 手力矩, 衰减, 补偿, 车速, 方向盘, 角度, 齿条力, keep, torque, hand, decay, attenuate, compensation, speed, steer, wheel, angle, rack

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111376971 A (BOSCH HUAYU STEERING SYSTEMS CO., LTD.) 07 July 2020 (2020-07-07)<br>    description, paragraphs 0112-0197, and figures 1-7 | 1-19 |
| A | CN 115503812 A (SUZHOU AUTOMOTIVE RESEARCH INSTITUTE, TSINGHUA UNIVERSITY (XIANGCHENG)) 23 December 2022 (2022-12-23)<br>    entire document | 1-19 |
| A | CN 115535066 A (TONGJI UNIVERSITY) 30 December 2022 (2022-12-30)<br>    entire document | 1-19 |
| A | CN 112977612 A (ZF AUTOMOTIVE GERMANY GMBH) 18 June 2021 (2021-06-18)<br>    entire document | 1-19 |
| A | JP 2014221588 A (NISSAN MOTOR CO., LTD.) 27 November 2014 (2014-11-27)<br>    entire document | 1-19 |
| A | US 2011029200 A1 (SHAH JITENDRA) 03 February 2011 (2011-02-03)<br>    entire document | 1-19 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 July 2024** | **01 August 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

EP 4 707 127 A1

**INTERNATIONAL SEARCH REPORT**
Information on patent family members

International application No.

**PCT/CN2024/100467**

| Patent document cited in search report | | | Publication date (day/month/year) | Patent family member(s) | | | Publication date (day/month/year) |
|---|---|---|---|---|---|---|---|
| CN | 111376971 | A | 07 July 2020 | None | | | |
| CN | 115503812 | A | 23 December 2022 | None | | | |
| CN | 115535066 | A | 30 December 2022 | None | | | |
| CN | 112977612 | A | 18 June 2021 | None | | | |
| JP | 2014221588 | A | 27 November 2014 | JP | 6194630 | B2 | 13 September 2017 |
| US | 2011029200 | A1 | 03 February 2011 | DE | 102009028181 | A1 | 10 February 2011 |
| | | | | DE | 102009028181 | B4 | 28 January 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310746157

- CN 202310744588